# EUROPEAN PATENT SPECIFICATION

(11) **EP 0 567 864 B1**
(45) Date of publication and mention of the grant of the patent: **18.03.1998**
(21) Application number: 93106193.1
(22) Date of filing: 16.04.1993
(51) Int. Cl.: G01T 1/29, H04N 1/40

(54) **Storage phosphor reader apparatus and calibration method**
Auslesevorrichtung für einen Speicherleuchtschirm und Kalibrierverfahren
Dispositif de lecture d'un écran fluorescent et procédé de calibrage

(30) Priority: 27.04.1992 US 874316
(43) Date of publication of application: 03.11.1993
(73) Proprietor: EASTMAN KODAK COMPANY, Rochester, New York 14650-2201 (US)
(72) Inventor: Whiting, Bruce Raymond, c/o EASTMAN KODAK COMPANY, Rochester, New York 14650-2201 (US); Kulpinski, Robert W., c/o EASTMAN KODAK COMPANY, Rochester, New York 14650-2201 (US)
(74) Representative: Schmidt, Peter, Dipl.-Ing.

(56) References cited:
- WO-A-91/12563
- US-A- 5 051 588
- US-A- 5 107 116

## Description

This invention relates in general to laser imaging apparatus and, more particularly, to a technique for calibrating a laser imaging apparatus such as a storage phosphor reader having a laser image scanner.

In a storage phosphor imaging system, as described in US-A-Re-31,847, a storage phosphor is exposed to an image-wise pattern of short wavelength radiation, such as x-ray radiation, to record a latent image pattern in the storage phosphor. The latent image is read out by stimulating the storage phosphor with a relatively long wavelength stimulating radiation, such as red or infrared. Upon stimulation, the storage phosphor releases emitted radiation of an intermediate wavelength, such as blue or violet light in proportion to the quantity of short wavelength radiation that was received. To produce a signal useful in electronic image processing, the storage phosphor is scanned in a raster pattern by a beam of light produced by a laser deflected by a oscillating or rotating polygon mirror. The emitted radiation is sensed by a photodetector, such as a photomultiplier, to produce an electronic image signal. The electronic image signal may then be digitized and stored in memory, displayed on a video monitor or reproduced on film by a laser printer or multiformat camera. In one type of scanning apparatus, the storage phosphor is placed on a translation stage and is translated in a page scan direction past a laser beam that is repeatedly deflected in a line scan direction to form the scanning raster.

In order to optimize the signal-to-noise ratio of the imaging system, it is desirable to collect as much of the emitted light as possible and to direct it to the photodetector. Typically, the light collector includes a tubular member extending the width of the storage phosphor and having a slot adjacent to the storage phosphor for receiving the emitted light. The internal surface of the collector tube is either specularly or diffusely reflective to reflect the emitted light to one or more photodetectors in communication with the collector tube. Because of the nonuniform reflectivity across the length of the light collection tube, the electronic image signal must be corrected to prevent streaks and other low spatial frequency image artifacts in the final read out image. Normally, this can be accomplished by scanning a storage phosphor having a uniform x-ray exposure and determining appropriate correction factors that are required to correct the final image signal. Such a technique is disclosed in European Patent Application 0138024. As disclosed in this patent, a storage phosphor image scanning readout apparatus includes a system for scanning a latent image in a storage phosphor and for obtaining an analog image signal. The latter signal is converted by means of an analog-to-digital converter to a digital signal. The analog-to-digital conversion system is provided with a function of normalizing the analog image signal by use of a standard correction image signal. The correction signal is detected in advance by scanning a uniformly exposed storage phosphor, digitally converting the analog image signal associated with this uniform field exposure, and storing the signal as the standard correction image signal. The correction system disclosed in this patent is disadvantageous because it requires a prescan step involving uniform x-ray exposure of the storage phosphor which is time consuming, expensive and requires access to an x-ray device.

It is known to monitor the laser beam during the scanning operation in order to correct for fluctuations in the intensity of the laser beam (see US-A-4,507,562; US-A-4,410,799; and US-A-4,896,222). Another correction system is disclosed in US-A-4,977,322, which discloses a method of minimizing image signal noise, including the steps of feeding an image signal to a high frequency component decreasing device for arbitrarily decreasing a high-frequency component, detecting the level of the image signal, and decreasing the high frequency component of the image signal by the high frequency component decreasing device in accordance with a decrease in the level of the image signal.

It is also known that, in order to improve the signal-to-noise ratio of a storage phosphor reader, background noise at the photodetector must be minimized. One such source of background noise is the spontaneous emission of light associated with the individual component gases in the laser tube. In a Helium Neon laser, for example, a low pressure mixture of primarily helium and neon as well as other trace gases are contained in a narrow cylindrical glass tube. A longitudinal DC electrical discharge is maintained in this cylinder creating a plasma. This excitation of the gases produces spontaneous emission at many different wavelengths including some light in the blue or violet regions of the spectrum which overlap the wavelength spectrum of the storage phosphor stimulated emission. While the optical cavity design of the laser typically maximizes the gain at a particular wavelength, .6328 microns for Helium Neon, some of the spontaneous emission light manages to propagate collinear with the main lasing beam. If this spontaneous emission light propagates through the entire optical system, then the spontaneous emission laser light will be diffusely reflected from the storage phosphor and collected by the light collector and detected by the photodetector simultaneously with the storage phosphor stimulated emission. The stimulated emission signal representative of the latent image in the storage phosphor would then be indistinguishable from the background signal created by the diffusely reflected spontaneous emission light from the laser. It is for this reason that a high pass or notch optical filter is typically placed in the laser beam path prior to where the laser beam stimulates the storage phosphor in order to block this unwanted background signal and consequently improve the signal-to-noise ratio of the storage phosphor reader.

However, since a portion of this spontaneous emission light falls in the same wavelength region as the storage phosphor emission, it can also be used to create a calibrated correction signal. If the spontaneous emission light is allowed to propagate through the optical system and is directed by the scanning optics to the image plane, where a diffusely reflecting surface exists, then the diffuse reflectance of this spontaneous emission light collected by the light collector and detected by the photodetector will mimic the stimulation and collection of light from a laser scanned storage phosphor. Therefore, a calibrated correction signal can be created without the need for scanning a uniformly x-ray exposed storage phosphor.

According to the present invention, there is provided a storage phosphor reader, which minimizes image artifacts in a detected electronic image signal, caused by nonuniform collection efficiency across the length of a scanned image light collector. According to an aspect of the invention, a storage phosphor reader includes a gas laser which produces a laser beam having stimulating light at the design wavelength of the laser and additional light created by the laser source due to spontaneous emission associated with the excitation of the individual component gases in the plasma of the laser tube. An optical high pass or notch filter is located in the beam path to absorb or block the spontaneous emission portion of the light so that only the stimulating light laser beam scans a storage phosphor which has been exposed to an x-ray image. Prior to scanning a latent image on a storage phosphor, this high pass or notch filter is removed from the laser beam path and the spontaneous emission light is scanned in a line scan direction across a diffusely reflecting substrate. A light collector collects the diffusely scattered light, a bandpass optical filter absorbs the stimulating laser light and passes the spontaneous emission signal light in the blue or violet wavelength range to a photodetector which produces an electronic image signal characteristic of the light collection efficiency across the length of the light collector.

In one embodiment of the present invention, an unexposed storage phosphor may be used as the diffuse reflector, in yet another embodiment, a diffuse reflectance substrate other than a storage phosphor may be used, and in yet another embodiment, a diffuse reflectance strip may be prearranged at the image plane.

FIG. 1 is a diagrammatic perspective view of a storage phosphor reader incorporating an embodiment of the present invention.

FIG. 2 is a graphical representation of components of light produced by an exemplary gas laser used in the embodiment of FIG. 1.

FIG. 3 is a signal diagram useful in explaining the operation of the present invention.

FIGS. 4, 5 and 6 are respective further embodiments of the present invention.

FIGS. 7, 8 and 9 are signal diagrams useful in explaining the operation of the embodiment of the present invention shown in FIG. 6.

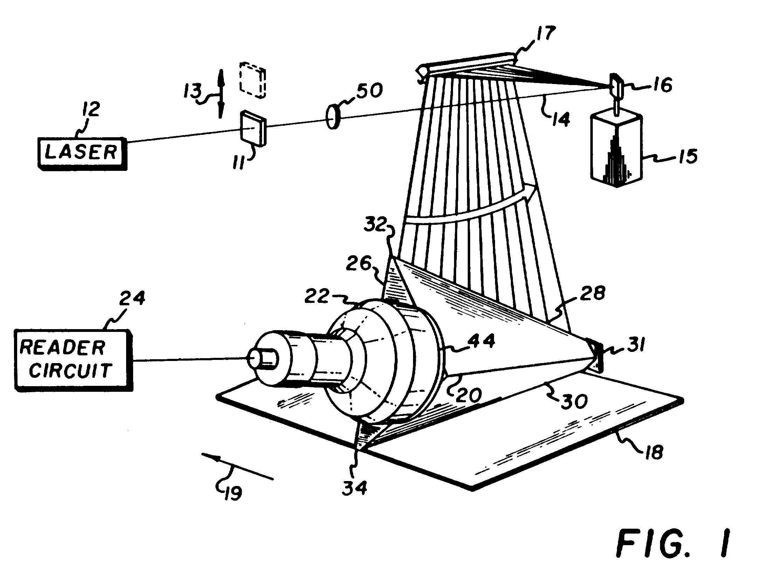

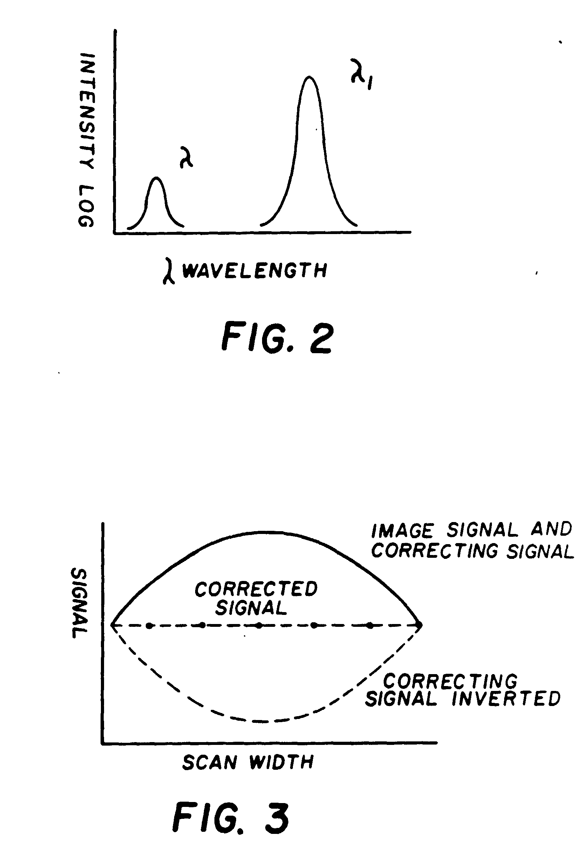

Although a preferred embodiment of the present invention will be described herein with respect to a storage phosphor reader having a laser scanning system, it will be understood that the present invention is applicable to other laser scanning systems, such as film digitizers, document scanners and the like. Referring to FIG. 1 there is shown a storage phosphor reader incorporating an embodiment of the present invention. As shown, during a reading operation of a storage phosphor having a latent x-ray image, storage phosphor reader 10 includes a laser 12 (such as a Helium-Neon gas laser) which produces a beam 14 of light. Beam 14 includes both stimulating light at a first wavelength λ, and spontaneous emission light at a second wavelength λ₂ (Fig. 2). Beam 14 passes through a high pass absorption filter 11 which is movable in the direction of arrow 13 into and out of the path of beam 14. Filter 11 filters out the spontaneous emission light and passes the stimulating light.

Beam 14 is scanned in a line scan direction by oscillating mirror 16 (driven by galvo 15) and folding mirror 17 across storage phosphor 18 after beam 14 has passed through focusing lens 50 which focuses beam 14 to the image plane represented by storage phosphor 18. Storage phosphor 18 is translated in a page scan direction 19 by a suitable translation mechanism (not shown). Other mechanisms, such as a drum, rollers, belt, or flat bed device, may also effect movement in direction 19. Storage phosphor 18 has a latent image, such as a latent x-ray image which is stimulated by laser beam 14 to emit light of a wavelength in the region of the spontaneous emission light at second wavelength λ₂. A light collector 20 of the type, for example, disclosed in commonly assigned US Patent 5 107 116, collects the emitted light and reflects it to photodetector 22. Bandpass filter 44 passes emitted light of wavelength λ₂ and rejects stimulating light of wavelength λ₁. Photodetector 22 converts the emitted light image into a electronic image signal which is applied to reader circuit 24. Collector 20 includes a vertical mirror 26, opposing angled mirrors 28 and 30, and apex mirror 31, which have specularly reflecting inner surfaces. Mirror 26 forms with mirrors 28 and 30, upper and lower slots 32 and 34 which allow passage of laser scanning beam 14 to stimulate storage phosphor 18 and allow entry of emitted radiation from storage phosphor 18 into collector 20.

According to the present invention, nonuniform collection efficiency across the length of a scanned light collector 20 is corrected prior to scanning a latent image on a storage phosphor. Prior to image scanning, high pass filter 11 is moved in direction 13 out of the path of laser beam 14 and both the stimulating light of wavelength λ₁ and the spontaneous emission light of wavelength λ₂ are scanned in a line direction across a diffusely reflecting substrate. Collector 20 collects the diffusely scattered light of both wavelengths, but only the spontaneous emission light is passed by filter 44 to photodetector 22. The correcting signal produced by photodetector 22 is supplied to reader circuit 24 where it is used to correct the image signal produced later. As shown in FIG. 3, the correcting signal has the same shape as the image signal. One method for correcting the image signal is by inverting the correcting signal and subtracting it from the image signal. A corrected signal is produced which is uniform across the scan width.

According to one embodiment of the present invention, when doing a scan for generation of a correction signal, filter 11 is removed from laser beam path 14 and both stimulating laser light and spontaneous emission light is allowed to propagate along laser beam path 14. An unexposed storage phosphor 18 is scanned in a line direction to produce the correcting signal. The correcting signal may be produced from a single line scan of storage phosphor 18 or from a full page scan by repeatedly scanning phosphor 18 as it is translated in the direction of arrow 19. In the latter case, the line scans are averaged to produce the correcting signal.

In another embodiment storage phosphor 18 can be replaced with a substrate coated with a diffusely reflecting material such as Eastman White (product of Eastman Kodak Company, Rochester, New York) or Duraflect (product of Labsphere Inc.) or any diffuse coating exhibiting high reflectance in the blue wavelength region. This sheet may then be scanned as described in the preceding embodiment.

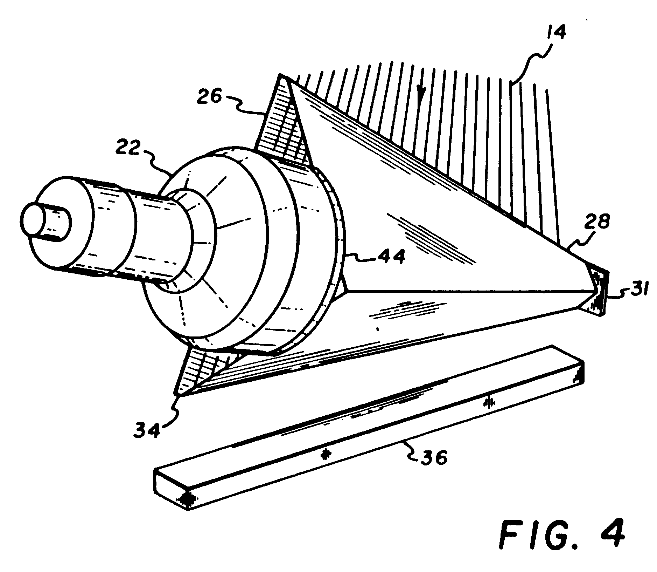

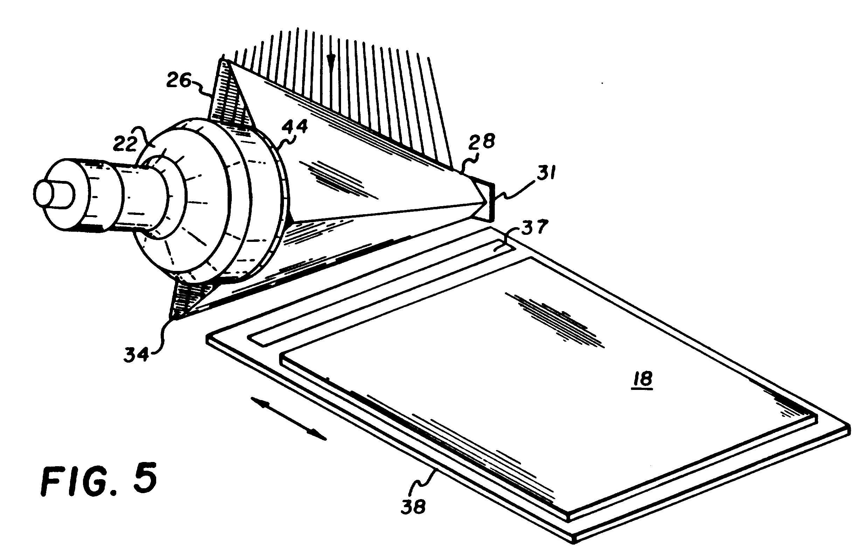

In a preferred embodiment of the invention shown in FIG. 4, a strip of diffuse reflectance material 36 is located near the image plane of the scan line and adjacent to lower slot 34 of collector 20. With filter 11 positioned so that it is not blocking the spontaneous emission light of beam 14, repeated line scans of the stationary diffuse reflectance strip 36 yield the correcting signal. Storage phosphor sheet 11 can then be scanned by moving blocking filter 13 (FIG. 1) into the beam path 14 and transporting the storage phosphor between lower slot 34 of collector 20 and over the stationary diffuse reflectance strip 36. In yet another preferred embodiment shown in FIG. 5, a flat bed translation stage 38 has a diffuse reflectance strip 37 attached to stage 38. When the stage 38 is at the storage phosphor loading position the diffuse reflectance strip 37 is under the lower slot 34 of collector 20. Therefore, prior to loading or prior to scanning, a correcting signal scan may be acquired.

Thus, through the use of the spontaneous emission blue light from a gas laser, the necessity of performing a prescan of a uniformly x-ray irradiated storage phosphor 18 is eliminated. This increases the number of storage phosphors which can be read by reader 10 in a given period and eliminates the inconvenience of pre-exposing a storage phosphor to x-ray radiation prior to actual exposure.

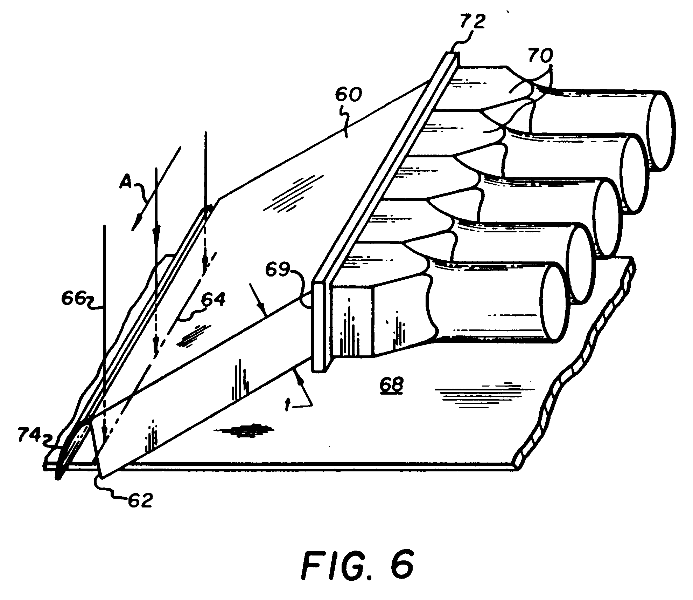

Turning now to FIG. 6, the present invention will be described with respect to another type of light collector. As shown, the light collector includes generally a rectangular slab of transparent material 60, having a thickness t greater than 20 mm. A light-receiving face 62 of the slab 60 is arranged adjacent to the scan line 64 of a laser beam 66 that moves in the direction of arrow A to scan a storage phosphor 68. At an opposite face 69 of the slab 60 are arranged a plurality (such as five shown) of photomultiplier tubes 70 in optical contact with the face 69 of the slab 60. A filter 72 which transmits at the emitted wavelength and spontaneous emission wavelength, and does not transmit at the stimulating wavelength, is located between the light receiving faces of photomultiplier tubes, and the transparent slab 60, and in optical contact therewith. An elongated reflector 74 is positioned opposite the light receiving face 62 of the transparent slab 60 to reflect emitted light into the light receiving face 62.

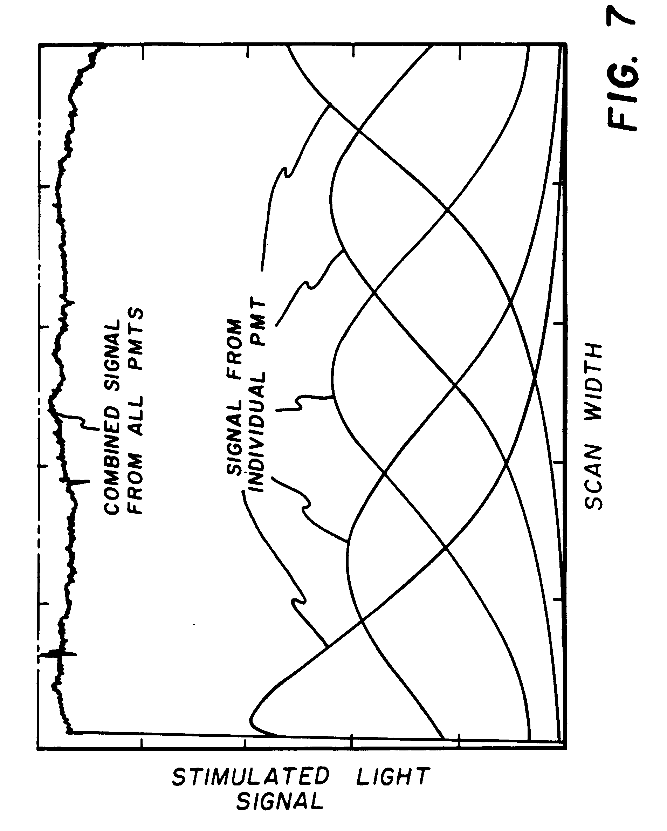

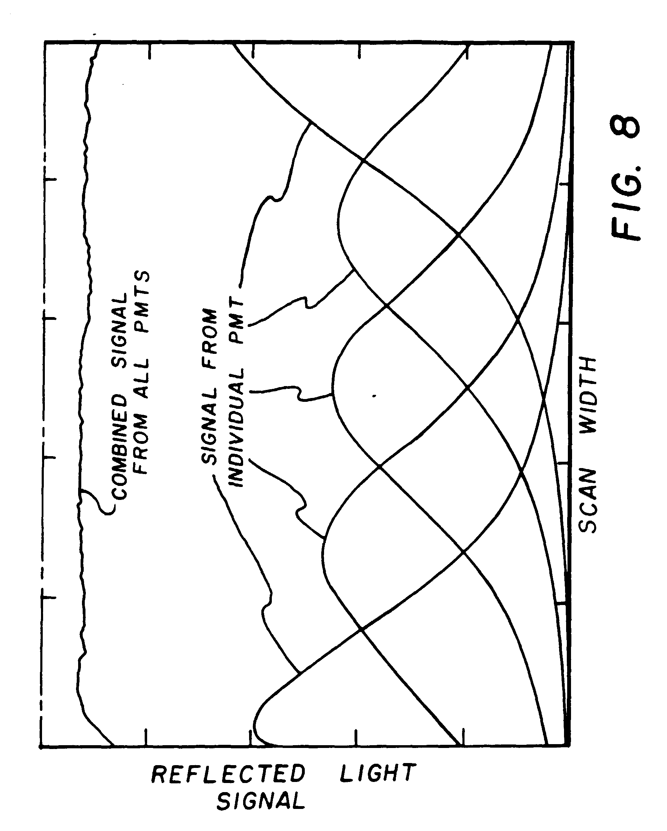

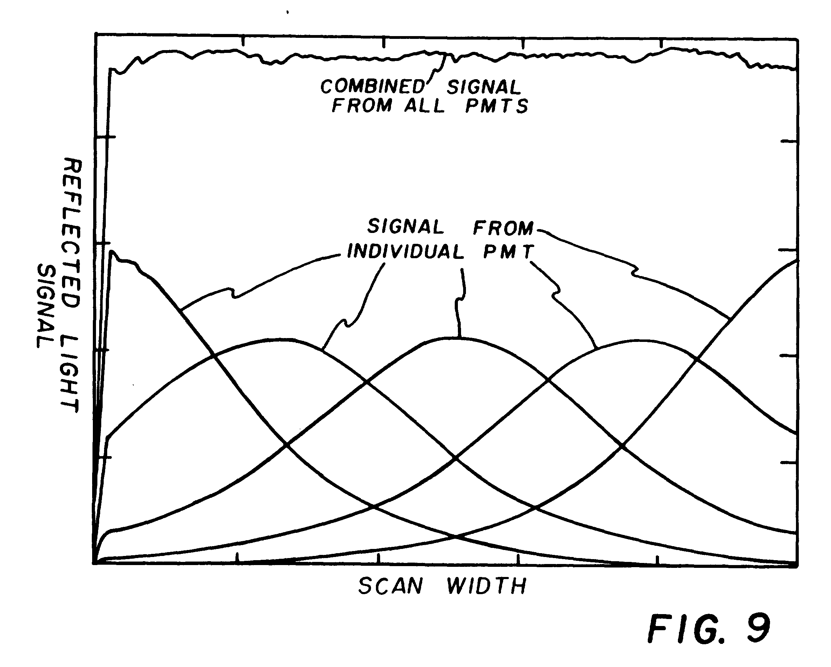

FIG. 7 is a graphical representation of the stimulated (emitted) light signal from each individual PMT 70 and the combined signal from all of the PMTs 70 produced by scanning a storage phosphor uniformly exposed to x-ray radiation. FIG. 8 is a graphical representation of the reflected light (spontaneous emission) signal from each individual PMT 70 and the combined signal from all of the PMTs 70 produced by scanning an unexposed storage phosphor with the spontaneous emission signal from a gas laser. FIG. 9 is a graphical representation of the reflected light (spontaneous emission) signal from each individual PMT 70 and the combined signal from all of the PMTs 70 produced by scanning a diffuse reflecting material (Eastman White) such as in the embodiments of FIG. 4 or FIG. 5, with the spontaneous emission signal from a gas laser.

A comparison of the emitted light signal represented in FIG. 7 and the reflected spontaneous light signal represented in FIG. 8 or FIG. 9 shows their substantial similarity so that the correcting signal techniques of FIG. 8 and FIG. 9 are substantially equivalent to the correcting signal technique of FIG. 7. The latter technique is more expensive, more complex and more time consuming.

### Industrial Applicability

The present invention has industrial application in laser image scanners, such as laser scanning storage phosphor readers, for producing scanned images which are free from image artifacts in a reflected or emitted image.

## Claims

1. A storage phosphor reader apparatus (10) comprising a laser (12) for producing a laser beam (14) including stimulating light of a first wavelength, and light of at least one second wavelength; filter means (11) in the beam path of said laser beam (14) for blocking said at least one second wavelength; means (16) for scanning said stimulating light of said laser beam (14) in a line scan direction across a storage phosphor (18) having a latent image, to stimulate the storage phosphor to emit light at an emitting light wavelength, according to a latent image stored in said storage phosphor; light collector means (20) for collecting said emitted light; and photodetector means (22) for detecting the light collected by said light collector means (20) and for producing an image signal, said apparatus being characterized by:
diffuse reflector means (36,37) provided to said light collector means (20);
means (13) for selectively moving said filter means (11) out of the beam path of said laser beam (14) when an image correcting signal is to be produced, so that said scanning means (16) scans the light of said first and second wavelength across said diffuse reflector means (36,37) and said light collector means collects reflected light from said reflector means and said photodetector means (22) detects reflected light of said second wavelength to produce an image correcting signal; and
means (24) for receiving said image signal and said image correcting signal to produce a corrected image signal representative of said latent image.

2. The storage phosphor reader apparatus of claim 1 wherein said laser (12) is a gas laser which produces stimulating light of said first wavelength and spontaneous emission light of said at least one second wavelength.

3. The storage phosphor reader apparatus of claim 1 wherein said storage phosphor (18) emits light in the same wavelength region as said laser light of said second wavelength and including filter means (44) associated with said photodetector means (22) for passing light of said second wavelength and of said emitted light wavelength to said photodetector means (22) and for keeping stimulating light of said first wavelength from said photodetector means (22).

4. The storage phosphor reader apparatus of claim 1 wherein an unexposed storage phosphor (18) is provided to said light collector means (20) as a diffuse reflector.

5. The storage phosphor reader apparatus of claim 1 wherein a stationary diffuse reflectance means (36) is provided to said light collector means (20) for receiving and reflecting said scanning light of said second wavelength.

6. The storage phosphor reader apparatus of claim 1 including means (38) for supporting said storage phosphor (18) for movement past said scanning beam, wherein said supporting means (38) has a diffuse reflectance means (37) for receiving and reflecting said light of said second wavelength and which is moved past said scanning light of said second wavelength.

7. A calibration method for a storage phosphor reader apparatus (10) that comprises a laser (12) for producing a laser beam (14) containing stimulating light of a first wavelength, and light of at least one second wavelength; filter means (11) in the beam path of said laser beam (14) for blocking said at least one second wavelength; means (16) for scanning said stimulating light of said laser beam in a line scan direction across a storage phosphor (18) having a latent image, to stimulate the storage phosphor to emit light at an emitting light wavelength, according to a latent image stored in said storage phosphor; light collector means (20) for collecting said emitted light; and photodetector means (22) sensitive to said emitted light for detecting the light collected by said light collector means (20) and for producing an image signal, said calibrating method being characterized by the steps of:
- providing a diffuse reflecting means (36,37) to said light collector means (20);
- selectively moving said filter means (11) out of the beam path of said laser beam (14) when an image correcting signal is to be produced so that light of said second wavelength is contained in the spectrum of said laser beam;
- scanning said light of said laser beam across said diffuse reflecting means (36,37);
- collecting reflected light from said diffuse reflecting means by said collector means (20);
- detecting said reflected light of said second wavelength by said photodetector means (22); and
- producing an image correcting signal from said reflected light of said second wavelength which correcting signal is used to correct said image signal later-on to produce a corrected image signal representative of said latent image.

8. The calibration method of claim 7 wherein said laser (12) is a gas laser which produces stimulating light of said first wavelength and spontaneous emission light of said at least one second wavelength.

9. The calibration method of claim 7 wherein said laser light of said second wavelength is in the same wavelength region as the emitted light from said storage phosphor (18) and said calibration method further comprising the steps of:
- blocking the stimulating light of said first wavelength reflected by said diffuse reflecting means (36,37) from reaching said photodetector means (22) by filter means (44) associated with said photodetector means; and
- passing light of said second wavelength and of said emitted light wavelength through said filter means (44) to said photodetector means (22).

10. The calibration method of claims 7 or 9 further comprising the step of
- providing an unexposed storage phosphor as a diffuse reflector to said light collector means (20).

11. The calibration method of claims 7 or 9 further comprising the step of
- providing a stationary diffuse reflectance means (36) to said light collector means (20) for receiving and reflecting said scanning light of said second wavelength.

12. The calibration method of claims 7 or 9 further comprising the step of
- supporting a diffuse reflectance means (37) adjacent to said storage phosphor (18) for movement past said light collector means (20) for receiving and reflecting said scanning light of said second wavelength.

## Patentansprüche

1. Speicherphosphor-Lesegerät (10) mit einem Laser (12) zum Erzeugen eines Laserstrahls (14),der stimulierendes Licht einer ersten Wellenlänge und Licht von zumindest einer zweiten Wellenlänge enthält; einem im Strahlengang des Laserstrahls (14) angeordneten Filtermittel (11) zum Blockieren der zumindest einen zweiten Wellenlänge; einer Einrichtung (16) zum Ablenken des stimulierenden Lichts des Laserstrahls (14) in Zeilenabtastrichtung quer über den ein latentes Bild aufweisenden Speicherphosphor, um den Speicherphosphor zu stimulieren, damit er Licht mit einer Wellenlänge von emittierendem Licht aussendet, das einem im Speicherphosphor gespeicherten latenten Bild entspricht; einem Licht-Kollektor (20) zum Sammeln des emittierten Lichts; und einem Fotodetektor (22) zum Erfassen des vom Licht-Kollektor (20) gesammelten Lichts und zum Erzeugen eines Bildsignals, **gekennzeichnet durch**
- diffuse Reflektormittel (36, 37) vor dem Licht-Kollektor (20);
- eine Einrichtung (13) zum wahlweisen Bewegen des Filters (11) aus dem Strahlengang des Laserstrahls (14), wenn ein Bildkorrektursignal erzeugt werden soll, so daß die Abtasteinrichtung (16) das Licht der ersten und zweiten Wellenlänge quer über den diffusen Reflektor (36, 37) ablenkt, der Licht-Kollektor (20) das vom Reflektormittel (36, 37) reflektierte Licht sammelt und der Fotodetektor (22) reflektiertes Licht der zweiten Wellenlänge erfaßt, um ein Bildkorrektursignal zu erzeugen; und
- eine Einrichtung (24), die das Bildsignal und das Bildkorrektursignal empfängt, um ein korrigiertes, das latente Bild kennzeichnende Bildsignal zu erzeugen.

2. Speicherphosphor-Lesegerät nach Anspruch 1, dadurch gekennzeichnet, daß der Laser (12) ein Gaslaser ist, der stimulierendes Licht der ersten Wellenlänge und Spontanemissionslicht der zumindest einen zweiten Wellenlänge erzeugt.

3. Speicherphosphor-Lesegerät nach Anspruch 1, dadurch gekennzeichnet, daß der Speicherphosphor (18) Licht im gleichen Wellenlängenbreich wie das Laserlicht der zweiten Wellenlänge emittiert, und daß ein dem Fotodetektor (22) zugeordnetes Filter (44) vorgesehen ist, das Licht der zweiten Wellenlänge und der Wellenlänge des emittierten Lichts zum Fotodetektor (22) durchläßt und stimulierendes Licht der ersten Wellenlänge zurückhält.

4. Speicherphosphor-Lesegerät nach Anspruch 1, dadurch gekennzeichnet, daß dem Licht-Kollektor (20) ein unbelichteter Speicherphosphor (18) als diffuser Reflektor zugeordnet ist.

5. Speicherphosphor-Lesegerät nach Anspruch 1, dadurch gekennzeichnet, daß ein stationäres, diffuses Reflexionsmittel (36) dem Licht-Kollektor (20) zugeordnet ist, welches das Abtastlicht der zweiten Wellenlänge empfängt und reflektiert.

6. Speicherphosphor-Lesegerät nach Anspruch 1, gekennzeichnet durch ein Mittel (38) zur Aufnahme des Speicherphosphors und Vorbeibewegen am Abtaststrahl, wobei das Auflagemittel (38) ein diffuses Reflexionsmittel (37) aufweist, welches das Licht der zweiten Wellenlänge empfängt und reflektiert, und am Abtaststrahl der zweiten Wellenlänge vorbeibewegt wird.

7. Kalibrierverfahren für ein Speicherphosphor-Lesegerät (10) mit einem Laser (12) zum Erzeugen eines Laserstrahls (14), der stimulierendes Licht einer ersten Wellenlänge und Licht von zumindest einer zweiten Wellenlänge enthält; einem im Strahlengang des Laserstrahls (14) angeordneten Filtermittel (11) zum Blockieren der zumindest einen zweiten Wellenlänge; einer Einrichtung (16) zum Ablenken des stimulierenden Lichts des Laserstrahls (14) in Zeilenabtastrichtung quer über den ein latentes Bild aufweisenden Speicherphosphor, um den Speicherphosphor zu stimulieren, damit er Licht mit einer Wellenlänge von emittierendem Licht aussendet, das einem im Speicherphosphor gespeicherten latenten Bild entspricht; einem Licht-Kollektor (20) zum Sammeln des emittierten Lichts; und einem für das emittierte Licht empfindlichen Fotodetektor (22) zum Erfassen des vom Licht-Kollektor (20) gesammelten Lichts und zum Erzeugen eines Bildsignals, **gekennzeichnet durch** folgende Schritte:
- Bereitstellen eines diffusen Reflexionsmittels (36, 37) vor dem Licht-Kollektor (20);
- wahlweises Herausbewegen des Filters (11) aus dem Strahlengang des Laserstrahls (14), wenn ein Bildkorrektursignal erzeugt werden soll, so daß Licht der zweiten Wellenlänge im Spektrum des Laserstrahls enthalten ist;
- Ablenken des Lichts des Laserstrahls quer über das diffuse Reflexionsmittel (36, 37);
- Sammeln des reflektierten Lichts vom diffusen Reflexionsmittel durch den Licht-Kollektor (20);
- Erfassen des Lichts der zweiten Wellenlänge durch den Fotodetektor (22); und
- Erzeugen eines Bildkorrektursignals vom reflektierten Licht der zweiten Wellenlänge, welches dazu dient, später das Bildsignal zu korrigieren, um ein korrigiertes, das latente Bild kennzeichnende Bildsignal zu erzeugen.

8. Kalibrierverfahren nach Anspruch 7, dadurch gekennzeichnet, daß der Laser (12) ein Gaslaser ist, der stimulierendes Licht der ersten Wellenlänge und Spontanemissionslicht der zumindest einen zweiten Wellenlänge erzeugt.

9. Kalibrierverfahren nach Anspruch 7, dadurch gekennzeichnet, daß das Laserlicht der zweiten Wellenlänge im gleichen Wellenlängenbreich wie das emittierte Licht vom Speicherphoshpor (18) liegt, gekennzeichnet durch folgende Schritte:
- Zurückhalten von stimulierendem Licht der ersten Wellenlänge, das vom diffusen Reflexionsmittel (36, 37) reflektiert wird, von dem Fotodetektor (22) durch ein dem Fotodetektor (22) zugeordnetes Filter (44); und
- Durchlassen des Lichts der zweiten Wellenlänge und der Wellenlänge des emittierten Lichts durch das Filter (44) zum Fotodetektor (22).

10. Kalibrierverfahren nach Anspruch 7 oder 9, gekennzeichnet durch folgenden Schritt:
- Bereitstellen eines unbelichteten Speicherphosphors als diffusen Reflektor für den Licht-Kollektor (20).

11. Kalibrierverfahren nach Anspruch 7 oder 9, gekennzeichnet durch folgenden Schritt:
- Bereitstellen eines stationären, diffusen Reflexionsmittels (36) für den Licht-Kollektor (20), welches das Abtastlicht der zweiten Wellenlänge empfängt und reflektiert.

12. Kalibrierverfahren nach Anspruch 7 oder 9, gekennzeichnet durch folgenden Schritt:
- Anordnen eines diffusen Reflexionsmittels (37) neben dem Speicherphosphor (18) zum Vorbeibewegen des Mittels (37) am Licht-Kollektor (20), um das Abtastlicht der zweiten Wellenlänge zu empfangen und zu reflektieren.

## Revendications

1. Dispositif de lecture d'un support de matériau fluorescent à effet rémanent (10) comprenant un laser (12) produisant un faisceau laser (14) incluant une lumière de stimulation d'une première longueur d'onde et une lumière d'au moins une seconde longueur d'onde ; un moyen de filtre (11) placé dans le trajet du faisceau dudit faisceau laser (14) pour bloquer ladite au moins seconde longueur d'onde ; un moyen (16) pour animer d'un mouvement de balayage ladite lumière de stimulation dudit faisceau laser (14) dans une direction de balayage ligne à travers le support de matériau fluorescent à effet rémanent (18) ayant une image latente, afin de stimuler le support de matériau fluorescent à effet rémanent pour émettre la lumière à une longueur d'onde de lumière d'émission, conformément à une image latente stockée dans ledit support de matériau fluorescent à effet rémanent ; un moyen de collecteur de lumière (20) pour collecter la lumière émise ; un moyen de photodétecteur (22) pour détecter la lumière collectée par ledit moyen de collecteur de lumière (20) et pour produire un signal représentatif de l'image, ledit dispositif étant caractérisé par :
un moyen de réflecteur diffus (36, 37) placé au niveau dudit moyen de collecteur de lumière (20) ;
un moyen (13) pour déplacer sélectivement ledit moyen de filtre (11) en dehors du trajet du faisceau dudit faisceau laser (14) lorsqu'un signal de correction d'image doit être produit, de sorte que ledit moyen de balayage (16) anime d'un mouvement de balayage la lumière desdites première et seconde longueurs d'onde à travers ledit réflecteur diffusant (36, 37) et ledit moyen de collecteur de lumière collecte la lumière réfléchie provenant dudit réflecteur et ledit moyen de photodétecteur (22) détecte la lumière réfléchie de ladite seconde longueur d'onde afin de produire un signal de correction d'image ; et
un moyen (24) pour recevoir ledit signal représentatif de l'image et ledit signal de correction d'image afin de produire un signal représentatif de l'image corrigée représentatif de l'image latente.

2. Dispositif de lecture selon la revendication 1, dans lequel ledit laser (12) est un laser à gaz qui produit la lumière de stimulation de ladite première longueur d'onde et la lumière d'émission spontanée de ladite au moins seconde longueur d'onde.

3. Dispositif de lecture selon la revendication 1, dans lequel ledit support de matériau fluorescent à effet rémanent (18) émet la lumière dans le même domaine de longueur d'onde que ladite lumière laser de ladite seconde longueur d'onde et comprenant un moyen de filtre (44) associé audit moyen de photodétecteur (22) pour laisser passer la lumière de ladite seconde longueur d'onde et de ladite longueur d'onde de lumière émise vers ledit moyen de photodétecteur (22) et pour bloquer la lumière de stimulation de ladite première longueur d'onde parvenant audit moyen de photodétecteur (22).

4. Dispositif de lecture selon la revendication 1, dans lequel un support de matériau fluorescent à effet rémanent (18) non exposé est placé au niveau dudit moyen de collecteur de lumière (20) comme réflecteur diffusant.

5. Dispositif de lecture selon la revendication 1, dans lequel un réflecteur diffusant fixe (36) est placé au niveau dudit moyen de collecteur de lumière (20) pour recevoir et réfléchir ladite lumière de balayage de la seconde longueur d'onde.

6. Dispositif de lecture selon la revendication 1, comprenant un moyen (38) pour supporter ledit support de matériau fluorescent à effet rémanent (18) pour déplacement devant ledit faisceau de balayage, dans lequel ledit moyen de support (38) présente un réflecteur diffusant (37) pour recevoir et réfléchir ladite lumière de ladite seconde longueur d'onde et qui est déplacé devant ladite lumière de balayage de ladite seconde longueur d'onde.

7. Procédé d'étalonnage d'un dispositif de lecture d'un support de matériau fluorescent à effet rémanent (10) qui comprend un laser (12) produisant un faisceau laser (14) contenant une lumière de stimulation d'une première longueur d'onde et une lumière d'au moins une seconde longueur d'onde ; un moyen de filtre (11) dans le trajet du faisceau laser (14) pour bloquer ladite au moins seconde longueur d'onde ; un moyen (16) pour animer d'un mouvement de balayage ladite lumière de stimulation dudit faisceau laser dans une direction de balayage ligne à travers un support de matériau fluorescent à effet rémanent (18) ayant une image latente, afin de stimuler le support de matériau fluorescent à effet rémanent afin d'émettre la lumière à une longueur d'onde de lumière d'émission, conformément à une image latente stockée dans l'écran fluorescent à effet rémanent ; un moyen de collecteur de lumière (20) pour collecter ladite lumière émise ; et un moyen de photodétecteur (22) répondant à ladite lumière émise pour détecter la lumière collectée par ledit moyen de collecteur de lumière (20) pour produire un signal représentatif de l'image, ledit procédé d'étalonnage étant caractérisé par les étapes consistant à :
- prévoir un moyen de réflexion diffuse (36, 37) au niveau dudit moyen de collecteur de lumière (20) ;
- déplacer sélectivement ledit moyen de filtre (11) en dehors du trajet de faisceau dudit faisceau laser (14) lorsqu'un signal de correction d'image doit être produit de sorte que la lumière de ladite seconde longueur d'onde est contenue dans le spectre dudit faisceau laser ;
- animer d'un mouvement de balayage ladite lumière dudit faisceau laser à travers ledit moyen de réflexion diffuse (36, 37) ;
- collecter la lumière réfléchie provenant dudit moyen de réflexion diffuse par ledit moyen de collecteur (20) ;
- détecter ladite lumière réfléchie de ladite seconde longueur d'onde par ledit moyen de photodétecteur (22) ; et
- produire un signal de correction d'image à partir de ladite lumière réfléchie de ladite seconde longueur d'onde, lequel signal de correction d'image est utilisé pour corriger ultérieurement ledit signal représentatif de l'image afin de produire un signal image corrigé représentatif de ladite image latente.

8. Procédé d'étalonnage selon la revendication 7, dans lequel ledit laser (12) est un laser à gaz qui produit une lumière de stimulation d'une première longueur d'onde et une lumière d'émission spontanée de ladite au moins une seconde longueur d'onde.

9. Procédé d'étalonnage selon la revendication 7, dans lequel ladite lumière laser de ladite seconde longueur d'onde est dans le même domaine de longueur d'onde que la lumière émise provenant dudit support de matériau fluorescent à effet rémanent (18) et ledit procédé d'étalonnage comprend de plus les étapes consistant à :
- bloquer la lumière de stimulation de ladite première longueur d'onde réfléchie par ledit moyen de réflexion diffuse (36, 37) pour qu'elle ne puisse pas atteindre ledit moyen de photodétecteur (22) par le moyen de filtre (44) associé audit moyen de photodétecteur ; et
- laisser passer la lumière de ladite seconde longueur d'onde et de ladite longueur d'onde de lumière émise à travers ledit moyen de filtre (44) vers ledit moyen de photodétecteur (22).

10. Procédé d'étalonnage selon la revendication 7 ou 9, comprenant de plus l'étape consistant à :
- prévoir un support de matériau fluorescent à effet rémanent non exposé comme réflecteur diffusant au niveau dudit moyen de collecteur de lumière (20).

11. Procédé d'étalonnage selon la revendication 7 ou 9, comprenant de plus l'étape consistant à
- prévoir un réflecteur diffusant fixe (36) au niveau dudit moyen de collecteur de lumière (20) pour recevoir et réfléchir ladite lumière de balayage de ladite seconde longueur d'onde.

12. Procédé d'étalonnage selon la revendication 7 ou 9, comprenant de plus l'étape consistant à
- supporter un réflecteur diffusant (37) adjacent audit support de matériau fluorescent à effet rémanent (18) en vue du déplacement de ce réflecteur devant ledit moyen de collecteur de lumière (20) pour recevoir et réfléchir ladite lumière de balayage de ladite seconde longueur d'onde.
